# EUROPÄISCHE PATENTSCHRIFT

(11) **EP 1 514 829 B1**
(45) Veröffentlichungstag und Bekanntmachung des Hinweises auf die Patenterteilung: **07.05.2008**
(21) Anmeldenummer: 04020833.2
(22) Anmeldetag: 02.09.2004
(51) Int. Cl.: B66B 9/00, B66B 11/02, G02F 1/00

(54) **Wandplatte mit Glasteil für eine Aufzugsanlage und Aufzugsanlage mit einer solchen Wandplatte**
Wall panel comprising a glass part for an elevator and an elevator comprising such a wall panel
Panneau mural comprenant une partie en verre pour un ascenseur et un ascenseur comprenant un tel panneau mural

(30) Priorität: 10.09.2003 EP 03405663
(43) Veröffentlichungstag der Anmeldung: 16.03.2005
(73) Patentinhaber: INVENTIO AG, 6052 Hergiswil (CH)
(72) Erfinder: Mehr, Dieter, 6303 Ebikon (CH)

(56) Entgegenhaltungen:
- WO-A-01/01191
- PATENT ABSTRACTS OF JAPAN Bd. 017, Nr. 389 (M-1449), 21. Juli 1993 (1993-07-21) & JP 05 070060 A (HITACHI BUILDING SYST ENG & SERVICE CO LTD), 23. März 1993 (1993-03-23)
- PATENT ABSTRACTS OF JAPAN Bd. 017, Nr. 177 (M-1393), 6. April 1993 (1993-04-06) & JP 04 333485 A (SHUNKAI CHIBA), 20. November 1992 (1992-11-20)
- PATENT ABSTRACTS OF JAPAN Bd. 1996, Nr. 11, 29. November 1996 (1996-11-29) & JP 08 177341 A (OHBAYASHI CORP), 9. Juli 1996 (1996-07-09)

## Beschreibung

Die Erfindung betrifft eine Wandplatte mit einem Glasteil für eine Aufzugsanlage nach dem Oberbegriff des Anspruchs 1.

Unter den Begriff einer Wandplatte für eine Aufzugsanlage sollen im Rahmen der vorliegenden Beschreibung Platten für verschiedene Begrenzungen von Aufzugsschächten und Aufzugskabinen verstanden werden, also nicht nur Platten für seitliche Wände, sondern auch für Böden, Decken, Türen bzw. Türflügel und Fenster. Die als Wandplatten bezeichneten Bauteile müssen hierbei nicht geometrisch exakt sondern nur annähernd plattenförmig sein

Wandplatten von Aufzugsschächten und Aufzugskabinen weisen in vielen Fällen mindestens teilweise Bereiche aus Glas bzw Glasteile auf, wobei das Glas voll transparent oder opak sein kann.

Insbesondere mit voll transparentem Glas werden ästhetisch ansprechende Anordnungen erzielt, und es kann zum Benutzerkomfort beitragen, wenn gewisse Ein- bzw. Aus- bzw. Durchblicke möglich sind. Beispielsweise lässt sich der momentane Standort der Aufzugskabine dadurch leichter erkennen. Ein wartender Benutzer kann auch sehen, ob eine Aufzugskabine frei ist oder ob ggfs. andere Benutzer, zu denen er sich nicht begeben möchte, in der Aufzugskabine weilen.

Anderseits erhalten die Benutzer wegen solcher Glasteile auch Einblicke und Ausblicke, die nicht unbedingt ästhetisch sind. Ausserdem kann sich bei gewissen Benutzern in einer Aufzugskabine mit transparenten Wänden, die in einem transparenten Aufzugsschacht angeordnet sind, auch Höhenangst entwickeln, wenn sich die Aufzugskabine im Bereich hochgelegener Stockwerke befindet. Zudem können Benutzer, die vor einer Schachttüre warten, Blicke auf Benutzer in der vorbeifahrenden Aufzugskabine erhaschen, die von den letzteren gegebenenfalls als unangenehm empfunden werden. All dies liesse sich vermeiden, wenn für die Aufzugsanlage nur Wandplatten ohne transparente Bereiche bzw. ohne Glasteile verwendet würden, doch würden damit auch die Vorteile preisgegeben, die man sich mit Wandplatten mit Glasteilen verschafft.

Um die Vorteile von Wandplatten mit transparenten Glasteilen den Vorteilen von nicht transparenten Wandplatten zu kombinieren, sind Aufzugsanlagen bekannt, bei welchen die Schachttüren im Wesentlichen aus einer Wandplatte mit einem plattengrossen Glasbereich bestehen, wobei für den Glasbereich ein an sich bekanntes, spezielles Glas verwendet wird, dessen Transparenz gesamthaft verändert werden kann, indem es unter elektrische Spannung gesetzt wird. Je nach angelegter elektrischer Spannung erscheint das Glas dann als transparent oder als opak,bzw. nicht-transparent.

JP05070060 zeigt eine weitere Anwendung von Glasplatten deren Transparenz wahlweise verändert werden kann. Eine Wand des Schachtes ist dabei mit diesem Glas ausgeführt und die Zone des jeweiligen Kabinenstandortes wird transparent geschalten, damit der Ausblick aus der Kabine frei wird.

Aus W00101191 ist eine weitere derartige Glasplatte bekannt, deren Transparenz als Gesamtes oder in einzelnen Segmenten veränderbar ist und welche im Besonderen zur Sichtbarmachung bzw. Unsichtbarmachung von Anzeigen verwendet werden kann.

Es ist nun die Aufgabe der Erfindung, eine Aufzugsanlage mit einer derartigen Wandplatte vorzuschlagen, welche weitergehende Komfort- und Gebrauchsansprüche berücksichtigt.

Diese Aufgabe wird erfindungsgemäss für die Wandplatte durch die Merkmale des kennzeichnenden Teils des Anspruchs 1 gelöst.

Bevorzugte Weiterbildungen der Wandplatte und der Auszugsanlage sind durch die jeweiligen abhängigen Ansprüche definiert.

Die neue Wandplatte weist ein Glasteil auf, das aus einem Spezialglas besteht, dessen Transparenz lokal und zeitlich steuerbar ist. Das Glasteil ist in Segmente unterteilt, bzw. aus mehreren Segmenten zusammengesetzt. Die Transparenz jedes Segmentes ist einzeln und unabhängig von den übrigen Segmenten steuerbar.

Die Segmente stossen vorzugsweise im Wesentlichen nahtlos aneinander Die Formen und Abmessungen der Segmente sind abhängig von den Effekten, die mit der individuellen Steuerung der Transparenz erreicht werden soll.

Zur Steuerung der Transparenz der Segmente ist eine Steuereinrichtung vorgesehen. Die Steuereinrichtung steuert die Transparenz der einzelnen Segmente auf Grund von Zustandsinformation durch eine Verknüpfung der Zustandsinformation mit derjenigen physikalischen Grösse, deren Funktion die Transparenz der Segmente beschreibt.

Unter Zustandsinformationen werden eine oder mehrere Detail-Informationen verstanden. Als Beispiele sollen genannt werden die Temperaturinformation, welche die Temperatur im Aufzugsschacht oder in der Aufzugskabine oder in der Umgebung beschreibt, die Helligkeitsinformation, die Zeitinformation, welche insbesondere den Wochentag und/oder die Uhrzeit beinhaltet, die Funktionsinformation, welche die Funktion bzw. eine Disfunktion innerhalb der Aufzugsanlage übermittelt, die Lageinformation, welche Auskunft gibt über die momentane Lage der Aufzugskabine, die Benutzerinformation, welche sich auf jeweilige Benutzer, insbesondere in der Aufzugskabine, bezieht, oder die Betriebsinformation, welche sich auf den Betriebszustand der Aufzugsanlage, wie beispielsweise Normalfahrt, Expressfahrt, Panoramafahrt, Servicefahrt, Notfall u.s.w. bezieht.

Die Verknüpfung, mit welcher die Steuerungseinrichtung arbeitet, ist vorgebbar. Sie kann entweder einmalig fest vorgegeben werden, oder sie kann entsprechend den Voraussetzungen und Bedürfnissen jeweils neu vorgegeben bzw. festgelegt werden.

Die Verknüpfung beinhaltet zum Beispiel Regeln über die Verwertung der Zustandsinformation zur Einflussnahme auf die Transparenz der einzelnen Segmente.

Wie schon erwähnt, ist jedes Segment einzeln ansteuerbar, was aber nicht ausschliesst, dass in gewissen Fällen Gruppen von Segmenten oder alle Segmente auf gleiche Transparenz gesteuert werden. Indem den verschiedenen Segmenten unterschiedliche Transparenz verliehen wird, lassen sich auch Muster in den Wandplatten bzw. den Glasteilen der Wandplatten erzeugen.

Muster können im Sinne eines gerasterten Bildes entstehen, wobei solche Muster um so feiner erzeugbar sind, je kleiner die einzelnen Segmente, insbesondere relativ zu den Glasteilen bzw. Wandplatten, bemessen sind. Muster können aber auch erzeugt werden, indem Segmente in speziellen Formen, zum Beispiel in Form von Kreisen oder Waben, verwendet werden. Hierbei müssen die Segmente vorzugsweise so geformt und angeordnet sein, dass sie in ihrer Gesamtheit flächendeckend wirken, obwohl Muster auch durch abwechslungsweise Anordnung von Segmenten mit und ohne steuerbarer Transparenz erzeugt werden können. Im Weiteren kann die Steuerung der Transparenz der einzelnen Segmente auch so durchgeführt werden, dass temporär ein Muster erzeugt wird, das eine Information, beispielsweise die Angabe des momentanen Stockwerkes, vermittelt.

Die neuen Wandplatten, die ein Glasteil mit selektiv steuerbarer Transparenz aufweisen, lassen sich für verschiedenartige Wandstücke oder Wände verwenden. Insbesondere können die Wandplatten Schnittstellen zum Anschliessen der Steuereinrichtung bilden und einen die Glasteile allseitig umfassenden Rahmen aufweisen oder nur Halterungen für einzelne Kanten, zum Beispiel für die Ober- und Unterkante von Glasteilen, bilden.

Solche Wandplatten lassen sich in verschiedener Weise an Aufzugsanlagen einsetzen. Einerseits lassen sich damit Durchblicke am Aufzugsschacht und an der Aufzugskabine, das heisst je nach Standort Ausblicke oder Einblicke, verändern. Anderseits lassen sich hinter solchen Glasbereichen oder Segmenten Eingabeeinheiten und Anzeigeeinheiten anordnen, die nur im Bedarfsfall sichtbar sein sollen.

Mit der Änderung von Durchblicken kann zum Beispiel an den Wänden der Aufzugskabine eine Art Geländer bzw. Barriere erzeugt oder besser gesagt simuliert werden, indem die Transparenz des Glasbereiches segmentweise so gesteuert wird, dass er oben durchsichtig und unten opak ist. Damit kann vermieden werden, dass bei einem Benutzer des Aufzuges Höhenangst entsteht. Mit Hilfe eines Sensors kann zudem die Kopfhöhe des Benutzers festgestellt und die Transparenz so gesteuert werden, dass der Benutzer trotz der Barrierenwirkung einen komfortablen Ausblick haben kann.

Bewegt sich eine Aufzugskabine in einem Aufzugsschacht, der örtlich wegen technischer Einrichtungen oder Verschmutzung unansehnlich ist, so kann die Transparenz der Glasbereiche der vorbeifahrenden Aufzugskabine so gesteuert werden, dass eine oder mehrere Wände der Aufzugskabine so lange opak sind, bis die Aufzugskabine den unansehnlichen Ort verlassen hat. In gewissermassen reziproker Weise kann ein temporärer Ausblick aus der Aufzugskabine ermöglicht werden, indem ein simuliertes Fenster in einer sonst opaken Wand durchsichtig gemacht wird, so dass Schriften oder Pictogramme an der Innenwand des Aufzugsschachtes lesbar sind während sich die Aufzugskabine an ihnen vorbeibewegt.

Ebenfalls mit der Änderung von Durchblicken kann auch die Transparenz der Schachttüren und der Kabinentüren je nach Bedarf gesteuert werden. Durchblicke sind beispielsweise aus Sicherheitsgründen erwünscht, damit ein potentieller Aufzugsbenutzer sofort erkennen kann, ob sich andere, ihm unangenehme Personen, ggfs. auch Hunde, in der Aufzugskabine befinden. Anderseits können unerwünschte Einblicke in die Aufzugskabine, zum Beispiel von unten, vermieden werden. Die Transparenz der Glasbereiche an den Schachttüren und an der Kabinentüre kann hierbei so gesteuert werden, dass diese nur in benutzerarmen Zeiten, also zum Beispiel nachts oder, in Bürogebäuden, an arbeitsfreien Tagen durchsichtig sind.

Neben der Verwendung der neuen Wandplatten zur Veränderung von Durchblicken werden, wie schon erwähnt, diese auch benutzt um Eingabeeinheiten, zum Beispiel mit Tasten oder in der Art von Touchscreens, und Anzeigeeinheiten digitaler oder analoger Art nur dann sichtbar zu machen, wenn dies erwünscht bzw. erforderlich ist. Eingabe- und Anzeigeeinheiten können am Äusseren des Aufzugsschachtes und/oder am Inneren der Aufzugskabine angeordnet sein.

Hierzu wird eine Wandplatte so angeordnet, dass das Glasteil oder Segmente des Glasteils die Eingabeeinheit abdeckt. Die Transparenz des Glasteils bzw. seiner Segmente wird so gesteuert, dass sie im Allgemeinen opak sind. Durch eine temporäre Umsteuerung können die Eingabeeinheiten ganz oder partiell sichtbar gemacht werden, indem die entsprechenden Segmente durchsichtig gemacht werden. Eine solche Umsteuerung kann entweder selbsttätig vor sich gehen, oder sie kann durch besondere Massnahmen herbeigeführt werden, die beispielsweise eine Wartungsperson oder ein Benutzer des Aufzuges ergreifen kann, oder die durch die Aufzugssteuerung selbst herbeigeführt werden. Ein Benutzer kann beispielsweise durch Tastendruck oder Einführung einer Chipkarte bzw. eines Schlüssels an einer geeigneten Stelle die Eingabeeinheit sichtbar machen. Die Sichtbarmachung der Eingabeeinheit kann in Notsituationen oder bei Disfunktionen der Aufzugsanlage auch selbsttätig erfolgen oder von einer Wartungsstation aus initiiert werden.

Ausführungsbeispiele und Wirkungsweise von Wandplatten nach der Erfindung werden im Folgenden an Hand von Beispielen und mit Bezug auf die Zeichnung ausführlich beschrieben. Es zeigen
- Fig. 1: eine Wandplatte nach der Erfindung, mit einer Steuereinrichtung, in vereinfachter, schematischer Darstellung;
- Fig. 2A: eine Wandplatte mit einem Glasbereich, der in einer ersten Art in Segmente aufgeteilt ist;
- Fig. 2B: eine Wandplatte mit einem Glasbereich, der in einer zweiten Art in Segmente aufgeteilt ist;
- Fig. 2C: eine Wandplatte mit einem Glasbereich, der in einer dritten Art in Segmente aufgeteilt ist;
- Fig. 3A: eine Aufzugskabine mit seitlichen Wandplatten, von denen jede einen nahezu plattengrossen Glasbereich aufweist, bei dem die Transparenzen der Segmente in Abhängigkeit von der Grösse eines Benutzers steuerbar sind, mit einem ersten, stehenden Benutzer;
- Fig. 3B: die in Fig. 3A dargestellte Aufzugskabine, mit einem zweiten, kleineren bzw. in einem Rollstuhl sitzenden Benutzer;
- Fig. 4: eine Aufzugsanlage, bei der die Transparenzen der Segmente an einer Wandplatte der Aufzugskabine in Abhängigkeit von der Lage der Aufzugskabine steuerbar sind, wobei die Aufzugskabine in fünf verschiedenen Höhenlagen dargestellt ist;
- Fig. 5A: eine Aufzugskabine mit seitlichen Wandplatten, die einen Glasbereich aufweisen, bei dem die Transparenzen der Segmente in Abhängigkeit von der Helligkeit der Umgebung oder der Uhrzeit steuerbar sind, in einem ersten Zustand;
- Fig. 5B: die in Fig. 5A dargestellte Aufzugskabine, in einem zweiten Zustand; und
- Fig. 6: eine Wandplatte einer Aufzugsanlage, wobei zwei Segmente eine Eingabeeinheit bzw. eine Anzeigeeinheit decken.

Opake Segmente und Segmente mit reduzierter Transparenz sind in allen Figuren schwarz dargestellt.

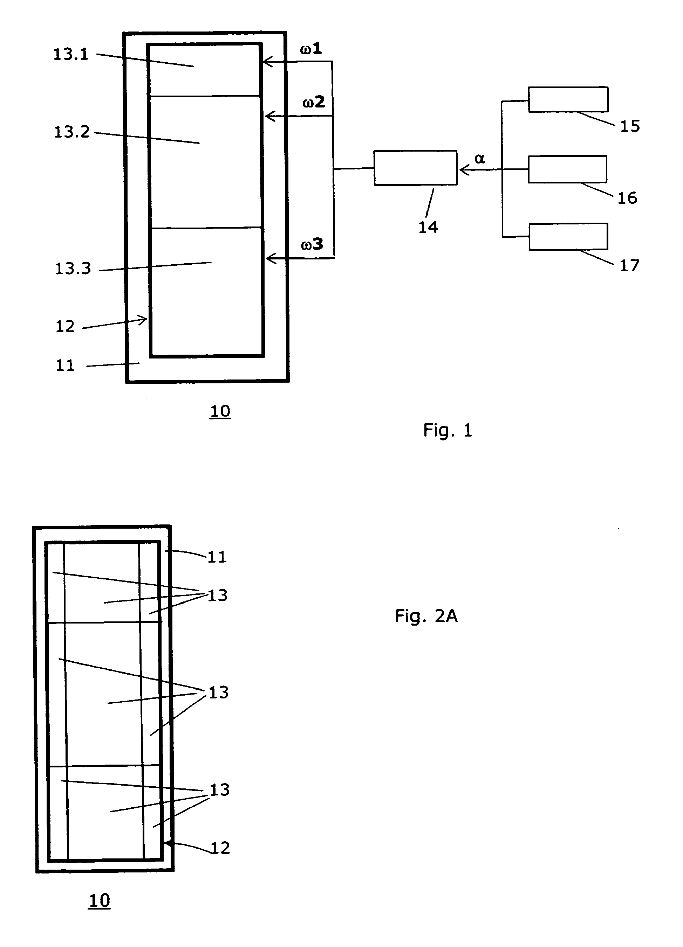

Fig. 1 zeigt eine Wandplatte 10 für eine Aufzugsanlage, die sich zur Montage sowohl an einem Aufzugsschacht als auch an einer Aufzugskabine verwenden lässt. Die Wandplatte 10 weist einen Rahmen 11 und ein Glasteil 12 auf. Das Glasteil 12 ist in drei Segmente 13.1, 13.2, 13.3 aufgeteilt. Eine nur schematisch dargestellte Steuereinrichtung 14 dient dazu, physikalische Grössen ω, deren Funktion die Beeinflussung der Transparenz der Segmente 13.1, 13.2, 13.3 ist, mit einer Zustandsinformation α zu verknüpfen, auf Grund derer die Transparenz der Segmente 13.1, 13.2. 13.3 einzustellen ist. Die Zustandsinformation α kann mehrere Teilinformationen beinhalten, wobei die Zustandsinformation α bzw. die Teilinformationen durch eine Sensoreinrichtung 15 ermittelt, über eine Eingabeeinrichtung 16, oder über eine (digitale) Schnittstelle eingegeben, oder durch eine Aufzugssteuerung 17 vorgegeben werden können.

Die in Fig. 2A dargestellte Wandplatte 10 für eine Aufzugsanlage weist einen Rahmen 11 und ein Glasteil 12 auf. Das Glasteil 12 ist in neun rechteckige Segmente 13 unterteilt, deren Transparenz einzeln steuerbar ist.

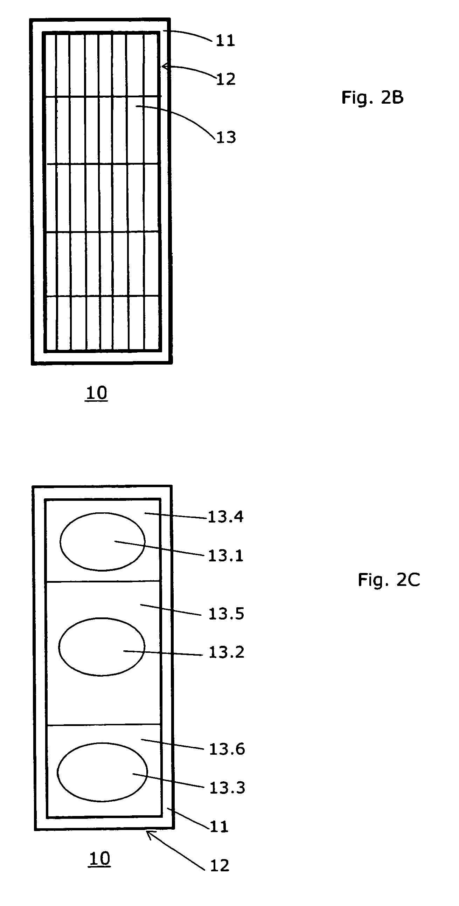

Fig. 2B zeigt eine weitere Wandplatte 10 für eine Aufzugsanlage, ebenfalls mit einem Rahmen 11 und einem Glasteil 12, wobei das Glasteil 12 in vierzig rechteckige Segmente unterteilt ist, von denen nur eines mit 13 bezeichnet ist. Diese Segmente 13 sind kleiner als die Segmente des in Fig. 2A gezeigten Glasteils 12. Die feine Unterteilung des Glasteils 12 in zahlreiche Segmente erlaubt es, mit Hilfe unterschiedlicher Transparenzen Bilder oder Schriften zu visualisieren, in der Art eines gerasterten Bildes.

Fig. 2C zeigt noch eine weitere Wandplatte 10 für eine Aufzugsanlage, wiederum mit einem Rahmen 11 und einem Glasteil 12. Das Glasteil 12 ist in sechs Segmente 13.1 bis 13.6 eingeteilt. Die Segmente 13.1 bis 13.3 sind oval und übereinander angeordnet. Jedes der ovalen Segmente 13.1 bis 13.3 ist innerhalb eines etwa ringförmigen Segmentes 13.4, bzw. 13.5, bzw. 13.6 angeordnet.

Die zusammenfassend mit 13 bezeichneten Segmente der in den Fig. 2A, 2B und 2C dargestellten Glasteile 12 sind jeweils einzeln ansteuerbar, so dass in jedem Glasteil 12 die Transparenz jedes Segmentes 13 einzeln steuerbar bzw. einstellbar ist.

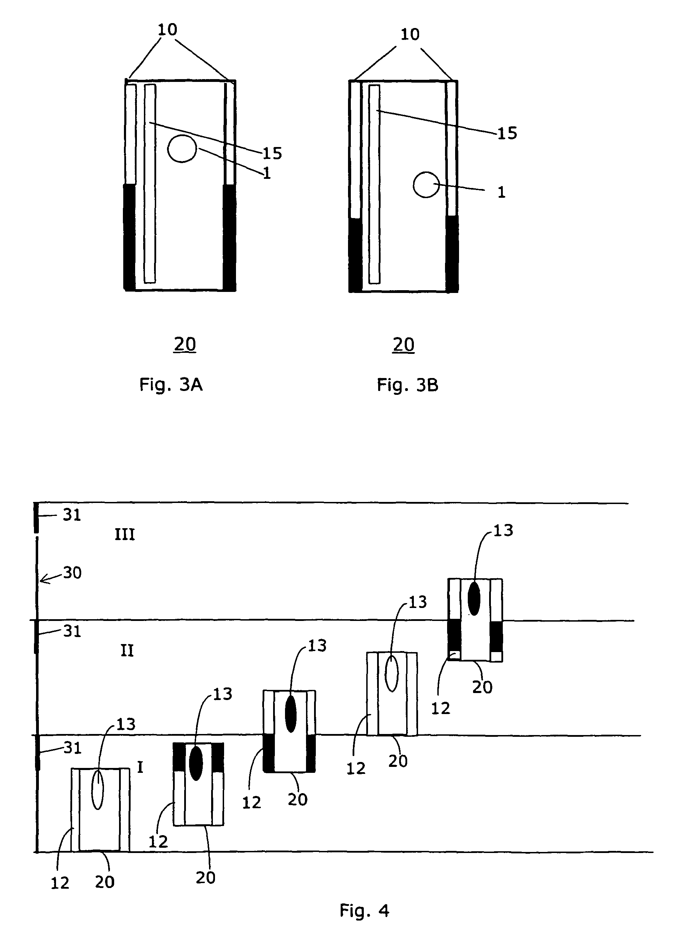

Fig. 3A und Fig. 3B zeigt jeweils eine Aufzugskabine 20 einer sonst nicht weiter dargestellten Aufzugsanlage. Die Wände der Aufzugskabine 20 weisen Wandplatten 10 auf, die im Wesentlichen durch Glasteile 12 gebildet sind. Die Glasteile 12 sind, wie mit Bezug auf die Fig. 2A und 2B beschrieben, in Segmente 13 unterteilt, wobei diese Unterteilung in den Fig. 3A und 3B nicht in Einzelheiten angegeben ist. Der Kopf 1 eines Benutzers der Aufzugskabine 20 ist schematisch durch einen Kreis dargestellt. Mit einer Sensoreinrichtung 15 wird die Kopfhöhe des Benutzers der Aufzugskabine 20 festgestellt, und die Transparenz der Segmente 13 jedes Segmentes wird so gesteuert, dass die Glasteile 12 bzw. deren Segmente 13, bis etwa zur üblichen Höhe der Brust des Benutzers opak und oberhalb davon durchsichtig sind. Dadurch lässt sich der Ausblick für den Benutzer auf einen bestimmten Höhenbereich der Aufzugskabine 20 reduzieren und Höhenangst vermeiden, die aufkommen kann, wenn die Wände der Aufzugskabine bis zum Boden voll transparent sind. Die hier nicht dargestellte Steuereinrichtung verknüpft hierbei die Höhe des Kopfes 1 des Benutzers mit der Auswahl der auf opak zu steuernden Segmente. Während einer Fahrt der Aufzugskabine 20 ändert sich in dem gezeigten Bespiel diese Auswahl der Segmente nicht. Es ist aber denkbar, dass beim Erreichen der unteren Stockwerke die durch den opaken Bereich erzeugte optische Barriere reduziert wird oder ganz wegfällt.

Fig. 4 zeigt eine Aufzugsanlage, die sich über mindestens drei Etagen I, II, III erstreckt. Die Aufzugskabine 20 ist in fünf verschiedenen Lagen dargestellt, die sie nacheinander bei einer Aufwärtsfahrt in einem Aufzugsschacht einnimmt. Vom Aufzugsschacht, in dem sich die Aufzugskabine 20 befindet, ist nur eine Wand 30, in Fig. 4 links, dargestellt. Im oberen Teil jeder der Etagen I, II, III ist der Aufzugsschacht durch ein seitliches Wandstück 31 begrenzt, das im Allgemeinen verschmutzt und unansehnlich ist. Die der Wand 30 des Aufzugsschachtes zugewandte Wand der Aufzugskabine 20 weist Wandplatten mit Glasteilen 12 auf. Die Glasteile 12 sind in Segmente 13 in Form horizontaler Streifen aufgeteilt, deren Transparenz einzeln steuerbar ist. Die in Fig. 4 in der Zeichenebene liegende Rückwand der Aufzugskabine 20 weist eine Wandplatte auf, die ein optionales Glasteil 12 aus einem ovalen Segment 13 mit steuerbarer Transparenz besitzt. Das ovale Segment 13 fluchtet jeweils, sobald die Aufzugskabine 20 in der richtigen Höhe ist, mit einer Beschriftung der gegenüberliegenden Rückwand des Aufzugsschachtes, welche angibt, auf welcher Etage sich die Aufzugskabine 20 befindet. Die Steuereinrichtung verknüpft bei dieser Anordnung die momentane Lage der Aufzugskabine 20 mit der Auswahl der auf opak zu steuernden Segmente 13. Bewegt sich die Aufzugskabine 20, so ändert sich diese Auswahl.

In der in Fig. 4 links dargestellten Lage befindet sich die Aufzugskabine 20 auf der Höhe der Etage I. Alle Segmente 13 der Glasteile 12 der Wandplatte, welche die linke seitliche Wand der Aufzugskabine 20 bilden, sind bezüglich ihrer Transparenz so gesteuert, dass sie vollständig durchsichtig sind. Auch das ovale Segment 12 der Rückwand der Aufzugskabine 20 ist vollständig transparent.

Die rechts davon gezeigte Aufzugskabine 20 befindet sich in einer höheren Lage. Um zu verhindern, dass der Blick der Benutzer auf das verschmutzte Wandteil 31 fällt, werden die höhenmässig mit dieser Wand 31 koinzidierenden Segmente 13 des Glasteils 12 der gegenüberliegenden Wand der Aufzugskabine 20 bezüglich ihrer Transparenz so gesteuert, dass sie nicht mehr vollständig durchsichtig sondern opak sind. Auch das ovale Glasteil 12 der Rückwand der Aufzugskabine ist so gesteuert, dass es opak ist.

Die mittlere der in Fig. 4 gezeigten Aufzugskabinen 20 ist in einer noch höheren Lage, in der sie bereits in die Etage II ragt. Auch hier werden die höhenmässig mit dem verschmutzten Wandstück 31 koinzidierenden Segmente 13 des Glasteils 12 der gegenüberliegenden Wand der Aufzugskabine 20 bezüglich ihrer Transparenz so gesteuert, dass sie nicht mehr vollständig durchsichtig sondern opak sind. Das ovale Glasteil 12 der Rückwand ist noch immer so gesteuert, dass es opak ist. Es ist offensichtlich, dass hierbei andere Segmente 13 opak sind als bei einer anderen Lage der Aufzugskabine 20.

Rechts davon ist die Aufzugskabine 20 in der Höhe der Etage II gezeigt. Die Steuerung der Transparenz aller Glasteile 12 bzw. Segmente 13 erfolgt in gleicher Weise wie wenn die Kabine sich in der Etage I befindet, wie es in Fig. 4 links dargestellt ist.

Ganz rechts in Fig. 4 ist die Aufzugskabine 20 zwischen den Etagen II und III gezeigt. Auch hier erfolgt die Steuerung der Transparenz der Glasteile 12 bzw. Segmente 13 so, dass der Blick von Benutzern nicht auf das unansehnliche Wandstück 31 fallen kann.

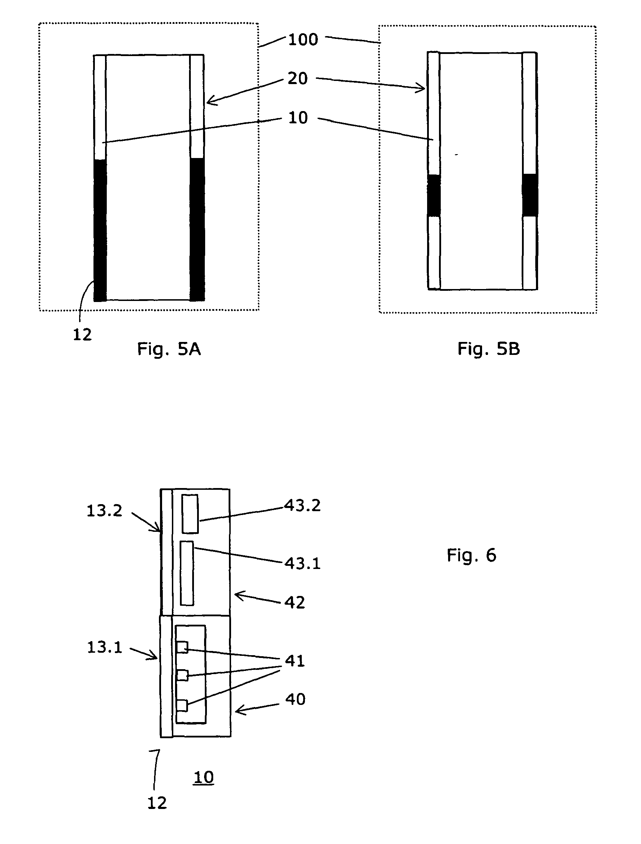

Die Fig. 5A und 5B zeigen eine Aufzugskabine 20 in einer Umgebung 100, mit Wandplatten mit Glasteilen 12, die in einzeln ansteuerbare Segmente 13 unterteilt sind. Die Transparenz der Segmente 13 ist steuerbar, wobei eine Sensoreinrichtung 15 die Helligkeit der Umgebung 100 feststellt, und diese Helligkeit die Zustandsinformation α oder eine Teilinformation ist. Liegt die Helligkeit über einem gewissen Grenzwert, das heisst tagsüber, so wird gemäss Fig. 5A die Transparenz der Segmente 13 so gesteuert, dass die Glasteile 12 im unteren Bereich der Seitenwände der Aufzugskabine 20 opak sind, so dass nur auf Kopfhöhe ein Ein- und Ausblick möglich ist. Liegt die Helligkeit unter diesem Grenzwert, das heisst abends und nachts, so wird gemäss Fig. 5B die Transparenz der Segmente 13 so gesteuert, dass die Glasteile 12 praktisch voll durchsichtig sind, wobei einzig eine Art virtuelles Geländer aus opaken Segmenten erzeugt wird. Statt die Helligkeit als Zustandsinformation α mit der Grösse ω zu verknüpfen, kann auch eine Uhr vorgesehen sein und die Zeit mit der Grösse ω verknüpfen werden.

Fig. 6 zeigt eine Wandplatte mit einem Glasteil 12, das zwei Segmente 13.1, 13.2 aufweist. Das Segment 13.1 überdeckt eine Eingabeeinheit 40, beispielsweise mit berührungslos arbeitenden Tasten 41, die in besonderen Fällen bzw. für ausgewählte Benutzer sichtbar gemacht werden soll, indem das sonst opake bzw. nicht-transparente Segment 13.1 so umgesteuert wird, dass es voll transparent ist. Alternativ überdeckt ein Segment 13.1 lediglich eine den Tasten 41 zugeordnete Anzeige oder Beschriftung und schaltet diese Beschriftung situationsgerecht sichtbar oder unsichtbar. Gleichzeitig werden die zugehörigen Tasten, beispielsweise eine Folientastatur, aktiv oder passiv geschalten.
Unter dem Begriff "besondere Fälle" sind beispielsweise Notfälle bzw. aussergewöhnliche Betriebszustände zu verstehen. Unter ausgewählten Benutzern sind zum Beispiel Benutzer zu verstehen, die einen mechanisch und/oder elektrisch wirksamen Schlüssel besitzen, mit welchem sie das Segment 13.1 umsteuern können. Das weitere Segment 13.2 ist über einer Anzeigeeinheit 42 angebracht, die beispielsweise eine Analoganzeige 43.1 und eine Digitalanzeige 43.2 aufweisen kann, die nur in gewissen Fällen sichtbar gemacht werden sollen.

In einer weiteren Ausführungsform ist die Wandplatte ein Standardbauteil, dass in verschiedenen Aufzugsanlagen einsetzbar ist. Um nach der Montage eine Anpassung an lokale Gegebenheiten der Aufzugsanlage zu ermöglichen, kann die Steuerung so ausgelegt sein, dass gewisse Segmente oder Bereiche der Wandplatte so angesteuert werden, das sie permanent als nicht-transparent erscheinen. Anhand eines Beispiels ist das Prinzip dieser Ausführungsform erläutert. Bei der Montage einer Schachttüre, die eine Wandplatte gemäss Erfindung aufweist, wird festgestellt, dass im Randbereich der Wandplatte Befestigungselemente durch das Glas der Wandplatte hindurch sichtbar sind. Um nun diese Befestigungselemente auszublenden, wird die Steuerung der Wandplatte so eingestellt (zum Beispiel durch geeignete Programmierschritte), das ein schmaler Streifen im Randbereich der Wandplatte nicht transparent ist. Der restliche Bereich wird entweder permanent auf transparent geschaltet, oder er kann, wie im Zusammenhang mit anderen Ausführungsformen je nach Bedarf transparent oder nicht-transparent geschaltet werden.

Die Wandplatte kann so ausgeführt sein, dass in einer speziellen Situation, zum Beispiel in einer Notfallsituation, eine (Flach-)-Bildschirm sichtbar gemacht wird, der sich hinter der Wandplatte befindet. Der Bildschirm kann dazu verwendet werden, um einen Sichtkontakt zur Aussenwelt herzustellen, während zum Beispiel Personen in der Aufzugskabine eingesperrt sind.

Gemäss Erfindung weist die Glasplatte Segmente auf, die einzeln oder gruppenweise ansteuerbar sind. Die Glasplatte umfasst vorzugsweise mehrere Schichten (zum Beispiel ähnlich wie bei einem Verbundglas), wobei mindestens eine der Schichten eine Liquid Crystal (LC) Schicht ist, deren Kristalle schaltbar sind. Diese Kristalle werden gemäss eine bevorzugten Ausführungsform durch eine Steuerungseinrichtung angesteuert, die mehrere Stromquellen umfasst. Wenn eine der Stromquellen einen Strom aufschaltet, entsteht in dem zugehörigen Segment der Glasplatte aufgrund einer Potentialdifferenz zwischen den Schichten der Glasplatte eine elektrisches Feld, das die Kristalle in eine anderen Ordnungszustand überführt. Dadurch kann die Transparenz in diesem Segment beeinflusst werden. Um die einzelnen Segmente ansteuern zu können, weist die Glasplatte in mindestens einer der Schichten entsprechende Leiterbahne auf, die entweder so dünn ausgeführt sind, dass sie für das menschliche Auge kaum sichtbar sind, oder die aus einem transparenten, leitfähigen Material gefertigt sind. Vorzugsweise sind die Stromquellen der Steuerungseinrichtung einzeln schalt- oder ansteuerbar.

Die Steuerungseinrichtung kann eine (digitale) Schnittstelle umfassen, oder mit Mitteln zum Vornehmen einer Eingabe (zum Beispiel ein Tastenfeld) ausgestattet sein, damit Verknüpfungen vorgeben werden oder geändert werden können. Über die Schnittstelle oder durch das Vornehmen einer Eingabe können auch Funktionen zu- oder abgeschaltet werden. Es können so zum Beispiel die Regeln über die Verwertung der Zustandsinformation vorgegeben oder verändert werden.

## Patentansprüche

1. Wandplatte (10) mit einem Glasteil (12) für eine Aufzugsanlage, dessen Transparenz durch eine steuernde Grösse (ω) steuerbar ist, wobei das Glasteil(12) in Segmente(13) unterteilt ist, deren Transparenz einzeln steuerbar(ω1, ω2, ω3) ist, **dadurch gekennzeichnet, dass** die Wandplatte eine Eingabeeinheit (40) aufweist, und dass
das Glasteil (12) oder einzelne Segmente (13) der Wandplatte (10) die Eingabeeinheit (40) abdeckt, wobei mittels dem Glasteil(12) oder-dem Segment(13) die Eingabeeinheit (40) wahlweise ganz oder partiell sichtbar, bzw. nicht sichtbar geschalten ist.

2. Wandplatte (10) mit einem Glasteil (12) nach Anspruch 1,
**dadurch gekennzeichnet,**
**dass** das Glasteil (12) oder die einzelnen Segmente (13) Anzeigen einer Eingabeeinheit(40) überdeckt und Tasten (41) einer Eingabeeinheit(40) zeitgleich mit einem zugehörigen Glasteil(12) oder zugehörigen Segmenten(13) aktiv-transparent bzw. passiv-nicht-transparent schaltbar ist.

3. Wandplatte(10) mit einem Glasteil(12) nach Anspruch 1 oder 2,
**dadurch gekennzeichnet,**
**dass** das Glasteil(13) mittels einer Steuereinrichtung(14) angesteuert ist, welche dazu ausgebildet ist, die Transparenz der Segmente(13) zu steuern auf Grund von qualitativer und/oder quantitativer Zustandsinformation(□), und unter Anwendung einer Verknüpfung der Zustandsinformation(□) mit der steuernden Grösse(ω1, ω2, ω3) und
**dass** die Zustandsinformation (α) eine oder mehrere der folgenden Teilinformationen umfasst:
- Helligkeitsinformation;
- Temperaturinformation;
- Zeitinformation;
- Funktionsinformation, welche die Funktion bzw. Disfunktion der Aufzugsanlage beschreibt;
- Ortsinformation, welche den momentanen Ort der Aufzugskabine beschreibt;
- Benutzerinformation betreffend einen Benutzer der Aufzugsanlage;
- Betriebsinformation betreffend Betriebszustand der Aufzugsanlage.

4. Wandplatte(10) mit einem Glasteil(12) nach einem der vorgängigen Ansprüche, **dadurch gekennzeichnet,**
**dass** eine Sensoreinrichtung (15) vorgesehen ist, mit welcher Zustandsinformation (α) selbsttätig ermittelbar ist.

5. Wandplatte(10) mit einem Glasteil(12) nach einem der vorgängigen Ansprüche, **dadurch gekennzeichnet,**
**dass** eine Eingabeeinrichtung (16) vorgesehen ist, mit welcher Zustandsinformation (α) eingebbar und/oder beeinflussbar ist.

6. Wandplatte(10) mit einem Glasteil(12) nach einem der vorgängigen Ansprüche, **dadurch gekennzeichnet,**
**dass** eine Aufzugssteuerung (17) vorgesehen ist, mit welcher die Zustandsinformation (α) beeinflussbar ist.

## Claims

1. Wall plate (10) with a glass part (12) for a lift installation, the transparency of which is controllable by a controlling magnitude (ω), whereas the glass plate (12) is divided into segments (13), the transparency of which is individually controllable (ω1, ω2, ω3), **characterised in that** the glass plate (12) or individual segments (13) of the wall plate (10) cover the input unit (40), wherein by means of the glass part (12) or the segment (13) the input unit (40) is switched to selectably be entirely or visible or partially visible or not visible.

2. Wall plate (10) with a glass part (12) according to claim 1, **characterised in** the glass part (12) or the individual segments (13) covers or cover displays of an input unit (40), and buttons (41) of an input unit (40) are switchable simultaneously with an associated glass part (12) or associated segments (13) to be active and transparent or passive and non-transparent.

3. Wall plate (10) with a glass part (12) according to claim 1 or 2, **characterised in that that** the glass part (13) is controlled by means of a control device (14) which is constructed for the purpose of controlling the transparency of the segments (13) on the basis of qualitative and/or quantitative state information (α) and with use of linking the state information (α) with the controlling magnitude (ω1, ω2, ω3) and the state information (α) comprises one or more of the following items of information:
- brightness information;
- temperature information;
- time information;
- function information, which describes the function or dysfunction of the lift installation;
- position information, which describes the instantaneous position of the lift cage;
- user information concerning a user of the lift installation;
- operating information concerning the operating state of the lift installation.

4. Wall plate (10) with a glass part (12) according to one of the preceding claims, **characterised in that** a sensor device (15) is provided, by which state information (α) can be ascertained automatically.

5. Wall plate (10) with a glass part (12) according to one of the preceding claims, **characterised in that** an input device (16) is provided by which state information (α) can be input and/or influenced.

6. Wall plate (10) with a glass part (12) according to one of the preceding claims, **characterised in that** a lift control (17) is provided by which the state information (α) can be influenced.

## Revendications

1. Panneau de paroi (10) avec une partie en verre (12) pour une installation d'ascenseur, dont la transparence est apte à être commandée grâce à une grandeur de commande (ω), la partie en verre (12) étant divisée en segments (13) dont la transparence est apte à être modifiée individuellement (ω1, ω2, ω3),
**caractérisé en ce que** le panneau de paroi comporte une unité d'entrée (40) et **en ce que** la partie en verre (12) ou des segments individuels (13) du panneau de paroi (10) couvrent l'unité d'entrée (40), laquelle est commandée à l'aide de la partie en verre (12) ou du segment (13) pour être sélectivement complètement ou partiellement visible, ou invisible.

2. Panneau de paroi (10) avec une partie en verre (12) selon la revendication 1, **caractérisé en ce que** la partie en verre (12) ou les segments individuels (13) couvrent des affichages d'une unité d'entrée (40), et des touches (41) d'une unité d'entrée (40) sont aptes à être actionnées en même temps qu'une partie en verre (12) associée ou que des segments (13) associés pour devenir actives et transparentes ou passives et non transparentes.

3. Panneau de paroi (10) avec une partie en verre (12) selon la revendication 1 ou 2, **caractérisé en ce que** la partie en verre (13) est commandée à l'aide d'un dispositif de commande (14) qui est conçu pour commander la transparence des segments (13) sur la base d'informations d'état (α) qualitatives et/ou quantitatives et en utilisant une association de l'information d'état (α) et de la grandeur de commande (ω1, ω2, ω3), et **en ce que** l'information d'état (α) comprend l'une au moins des informations partielles suivantes :
- information de luminosité ;
- information de température ;
- information temporelle ;
- information de fonctionnement qui décrit le fonctionnement ou le dysfonctionnement de l'installation d'ascenseur ;
- information de lieu qui décrit le lieu où se trouve momentanément la cabine d'ascenseur ;
- information d'utilisateur concernant un utilisateur de l'installation d'ascenseur ;
- information de mode de fonctionnement concernant le mode de fonctionnement de l'installation d'ascenseur.

4. Panneau de paroi (10) avec une partie en verre (12) selon l'une des revendications précédentes, **caractérisé en ce qu'**il est prévu un dispositif de capteur (15) grâce auquel une information d'état (α) peut être détectée de manière autonome.

5. Panneau de paroi (10) avec une partie en verre (12) selon l'une des revendications précédentes, **caractérisé en ce qu'**il est prévu un dispositif d'entrée (16) grâce auquel une information d'état (α) peut être entrée et/ou influencée.

6. Panneau de paroi (10) avec une partie en verre (12) selon l'une des revendications précédentes, **caractérisé en ce qu'**il est prévu une commande d'ascenseur (17) grâce à laquelle l'information d'état (α) peut être influencée.
